## Europäisches Patentamt
## European Patent Office
## Office européen des brevets

(19)

(11) Numéro de publication: **0 102 890**
**B1**

(12) **FASCICULE DE BREVET EUROPEEN**

(45) Date de publication du fascicule du brevet: 17.04.85

(51) Int. Cl.⁴: **C 01 B 6/04**

(21) Numéro de dépôt: 83401663.6

(22) Date de dépôt: 16.08.83

(54) Procédé et dispositif d'hydrogénation en continu du lithium dans un mélange de sels fondus.

(30) Priorité: **31.08.82 FR 8214864**

(43) Date de publication de la demande: **14.03.84 Bulletin 84/11**

(45) Mention de la délivrance du brevet: **17.04.85 Bulletin 85/16**

(84) Etats contractants désignés: **BE DE FR GB IT NL**

(56) Documents cités: **FR - A - 2 365 518**

(73) Titulaire: **RHONE-POULENC SPECIALITES CHIMIQUES, "Les Miroirs" 18, Avenue d'Alsace, F-92400 Courbevoie (FR)**

(72) Inventeur: **Dumousseau, Jean-Yves, 60 rue des Dames, F-75017 Paris (FR)**
Inventeur: **Grosbois, Jean, 357 Parc de Cassan, F-95290 L'Isle Adam (FR)**
Inventeur: **Jacubert, Serge, 12 Rue Jules Herbron, F-78220 Viroflay (FR)**

(74) Mandataire: **Savina, Jacques et al, RHONE-POULENC RECHERCHES Service Brevets Chimie et Polymères 25, quai Paul Doumer, F-92408 Courbevoie Cédex (FR)**

## Description

La présente invention concerne un procédé et un dispositif permettant l'hydrogénation, en continu du lithium dans un mélange de sels fondus, en vue de préparer de l'hydrure de lithium dans ledit mélange.

Dans un certain nombre de réactions chimiques on utilise de l'hydrure de lithium. C'est en paritculier le cas de la préparation du silane par réaction entre des chlorosilanes et l'hydrure de lithium.

On a déjà décrit dans le cadre d'un tel procédé, l'hydrogénation du lithium pour former l'hydrure de lithium. Par exemple, le brevet français N 2.365.518 décrit un procédé de production de silane dans un dispositif dans lequel on effectue l'hydrogénation du lithium surnageant sur un mélange de sels fondus de composition eutectique, l'hydrure de lithium formé étant mélangé avec la masse fondue grâce à des moyens de circulation de façon à obtenir un mélange homogène. Selon ce procédé, on opère en discontinu, c'est-à-dire que le lithium provenant d'un électrolyseur est hydrogéné puis mis en réaction avec les chlorosilanes, le réacteur est ensuite alimenté avec une nouvelle charge de lithium qui est à son tour hydrogénée.

Un tel procédé ne permet donc pas une hydrogénation en continu du lithium. Par ailleurs, l'hydrogénation complète du lithium s'avère très longue et nécessite des conditions d'agitation et de température sévères quant à la corrosion et à la tenue mécanique des matériaux.

La demanderesse a trouvé un procédé et un dispositif qui permettent d'hydrogéner en continu le lithium dans des conditions de mise en œuvre notamment de température particulièrement intéressantes. De plus, et c'est un autre but visé par la présente invention l'hydrure de lithium obtenu qui est dissous dans le mélange de sels fondus est exempt de lithium métallique ce qui rend son utilisation ultérieure notamment dans le cadre d'un procédé de fabrication de silane très attrayante. Enfin, le procédé de l'invention permet d'hydrogéner le lithium avec une excellente productivité dans un dispositif de taile réduite.

Lorsque l'on veut réaliser en continu la réaction d'hydrogénation du lithium dans les conditions et avec les avantages décrits ci-dessus, il a été trouvé, et c'est là l'objet de la présente invention, que ladite réaction peut très avantageurement s'effectuer dans un réacteur de contact gaz-liquide agité, ledit réacteur étant couplé avec un décanteur présentant une surface de décantation S exprimée en m² telle que de préférence $\frac{S}{Q}$ soit comprise entre 0,1 et 0,3 m²/m³/h, Q étant le débit liquide exprimé en m³/h entrant dans le décanteur, la phase légère surnageante étant recyclée dans ledit réacteur alors que la phase lourde restante est évacuée.

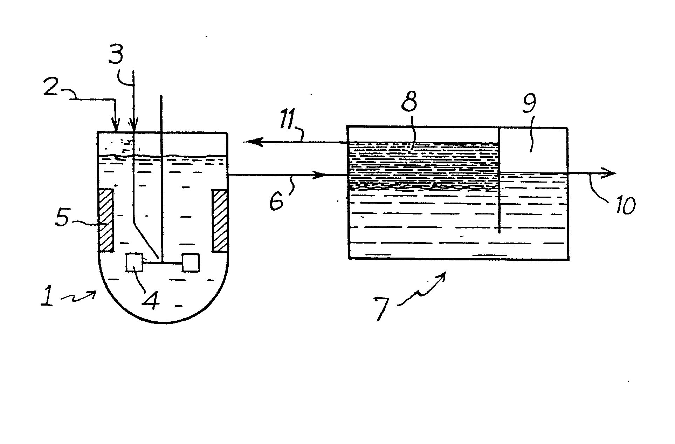

Le dispositif pour l'hydrogénation en continu du lithium dans un mélange de sels fondus selon l'invention est schématisé sur la figure unique il est caractérisé en ce qu'il comporte :

— un réacteur d'hydrogénation (1) agité (4) alimenté en continu par le mélange de sels fondus contenant le lithium (2) et par l'hydrogène (3) nécessaire à ladite hydrogénation,

— un décanteur (7) alimenté (6) avec un débit Q par le mélange provenant du réacteur d'hydrogénation, ledit décanteur comportant:

   — une zone de décantion (8) de surface S,

   — un dispositif d'évacuation de la phase légère par débordement (11),

   — un dispositif d'évacuation de la phase lourde comportant un puits (9) et un déversoir (10);

   la phase légère qui comporte essentiellement du lithium est recyclée (11) dans le réacteur (1).

Le procédé mettant en œuvre le dispositif de l'invention est caractérisé en ce que:

— le réacteur d'hydrogénation est alimenté en continu par de l'hydrogène et le mélange de sels fondus véhiculant le lithium; l'hydrogénation est effectuée à une température comprise de préférence entre 470° C et 510° C,

— le mélange provenant du réacteur d'hydrogénation qui contient de l'hydrure de lithium, du lithium métallique n'ayant pas réagi et le mélange de sels fondus est introduit en continu dans le décanteur,

— dans le décanteur le lithium qui surnage est séparé et recyclé en continu dans le réacteur d'hydrogénation tandis que l'hydrure de lithium formé dissous dans le mélange de sels fondus est évacué.

Le mélange de sels fondus mis en œuvre selon l'invention est constitué de chlorure de lithium et d'au moins un autre clorure alcalin et/ou alcalino-terreux. Le mélange est de préférence utilisé au voisinage de la composition eutectique. On utilise de préférence un mélange de composition eutectique clorure de lithium chlorure de potassium.

Par ailleurs, le mélange introduit dans le réacteur d'hydrogénation contient de préférence au plus 21 moles de lithium pour 100 moles de mélange de sels fondus, ceci afin de conserver la fluidité nécessaire au bon fonctionnement du dispositif.

Selon une variante de l'invention il est également possible dans le dispositif d'hydrogénation de l'invention et selon un procédé similaire d'opérer l'hydrogénation d'alliages lithium-calcium contenant au moins 50% en mole de lithium. Dans ce cas on met en œuvre un mélange de sels fondus de composition eutectique à base de clorure de lithium et de chlorure de calcium et d'au moins un autre chlorure alcalin et/ou alcalino-terreux.

Selon une autre variante, il doit bien être entendu que la présente invention couvre également les dispositifs intégrés réalisant les mêmes opérations dans un nombre différent d'enceintes: 1, 2, 3 . . .

On décrit ci-après en faisant référence à la figure unique le dispositif d'hydrogénation préféré selon l'invention.

Sur cette figure on a schématisé:

— en (1) le réacteur d'hydrogénation proprement dit, ce réacteur comporte une alimentation (2) par laquelle arrive le mélange de sels fondus contenant le lithium à hydrogéner, une arrivée (3) d'hydrogène et une agitation intense formée d'un agitateur proprement dit (4) et de contrepales (5) fixées à la paroi du réacteur,

— un décanteur (7) est alimenté (6) avec un débit Q par le mélange en cours de réaction provenant du réacteur (1); ce mélange en cours de réaction comporte le mélange de sels fondus, du lithium et de l'hydrure de lithium qui est dissous dans les sels, ledit décanteur comporte:
  — une zone de décantation (8) de surface S,
  — un dispositif d'évacuation de la phase légère par débordement (11),
  — un dispositif d'évacuation de la phase lourde comportant un puits (9) et un déversoir (10);

la partie décantation est réalisée de façon qu'on y effectue la séparation physique (décantation) du lithium présent dans le mélange d'avec le reste de ce mélange, la surface S de cette partie de décantation est telle que

$$0,1 < \frac{S}{Q} < 0,3;$$

dans la partie décantation (8) on réalise la séparation physique du lithium n'ayant pas été hydrogéné d'avec le reste du mélange, ce lithium est renvoyé, par la canalisation (11) dans le réacteur (1).

On donne ci-après un exemple d'utilisation du dispositif selon l'invention.

L'alimentation du réacteur (1) est réalisée d'une part (2) avec 2,31 (k mole/heure) d'un mélange contenant 1,07 (k mole/heure) de LiCl, 0,84 k mole/h de KCl et 0,4 (k atome gramme/h) de Li et d'autre part (3) avec 0,2 (k mole/h) d'hydrogène.

Le débit d'alimentation (6) du décanteur est d'environ 120 kg/h dont environ 10 kg/h de lithium non hydrogéné qui après décantation dans la partie (8) dudit décanteur est recyclé (11) vers le réacteur.

Le débit de sortie (10) du décanteur sera identique au débit d'entrée, le mélange ne contenant plus de lithium mais contenant 0,4 kg mole/h d'hydrure de lithium.

La surface de la partie (8) du décanteur est de $10^{-2}$ m$^2$; la hauteur, dans cette partie (8) de la bande de coalescence est d'environ $10^{-1}$ m.

**Revendications**

1. Dispositif pour l'hydrogénation en continu du lithium dans un mélange de sels fondus caractérisé en ce qu'il comporte:

— un réacteur d'hydrogénation (1) agité (4) alimenté en continu par le mélange de sels fondus contenant le lithium (2) et par l'hydrogène (3) nécessaire à ladite hydrogénation,

— un décanteur (7) alimenté (6) avec un débit Q par le mélange provenant du réacteur d'hydrogénation, ledit décanteur comportant:
  — une zone de décantion (8) de surface S,
  — un dispositif d'évacuation de la phase légère par débordement,
  — un dispositif d'évacuation de la phase lourde comportant un puits (9) et un déversoir (10).

2. Dispositif selon la revendication 1 caractérisé en ce qu'il comporte:

— un réacteur d'hydrogénation (1) proprement dit; ce réacteur comporte une alimentation (2) par laquelle arrive le mélange de sels fondus contenant le lithium à hydrogéner, une arrivée (3) d'hydrogène et une agitation intense formée d'un agitateur proprement dit (4) et de contrepales (5) fixées à la paroi du réacteur,

— un décanteur (7) alimenté (6) avec un débit Q par le mélange en cours de réaction provenant du réacteur (1); ce mélange en cours de réaction comporte le mélange de sels fondus, du lithium et de l'hydrure de lithium qui est dissous dans les sels, ledit décanteur comporte:
  — une zone de décantation (8) de surface S,
  — un dispositif d'évacuation de la phase légère par débordement (11),
  — un dispositif d'évacuation de la phase lourde comportant un puits (9) et un déversoir (10);

la partie décantation est réalisée de façon qu'on y effectue la séparation physique (décantation) du lithium présent dans le mélange d'avec le reste de ce mélange, la surface S de cette partie décantation est telle que

$$0,1 < \frac{S}{Q} < 0,3;$$

dans la partie décantation (8) on réalise la séparation physique du lithium n'ayant pas été hydrogéné d'avec le reste du mélange, ce lithium est renvoyé, par la canalisation (11) dans le réacteur (1).

3. Procédé mettant en œuvre le dispositif de l'un quelconque des revendications 1 ou 2 caractérisé en ce que

— le réacteur d'hydrogénation est alimenté en continu par de l'hydrogène et le mélange de sels fondus véhiculant le lithium; l'hydrogénation est effectuée à une température comprise de préférence entre 470°C et 510°C,
— le mélange provenant du réacteur d'hydrogénation qui contient de l'hydrure de lithium, du lithium métallique n'ayant pas réagi et le mélange de sels fondus est introduit en continu dans le décanteur,
— dans le décanteur le lithium qui surnage est séparé et recyclé en continu dans le réacteur d'hydrogénation tandis que l'hydrure de lithium formé dissous dans le mélange de sels fondus est évacué.

**Patentansprüche**

1. Vorrichtung zur kontinuierlichen Hydrierung von Lithium in einer Mischung geschmolzener Salze, dadurch gekennzeichnet, daß sie besteht aus:

— einem Hydrierreaktor (1) mit Rührung (4), dem kontinuierlich die das Lithium enthaltende Mischung geschmolzener Salze (2) und der zur Hydrierung erforderliche Wasserstoff (3) zugeführt werden,
— einem Absetzbehälter (7), dem eine Menge Q der Mischung (6) aus dem Hydrierreaktor zugeführt wird und der besteht aus:
    — einer Absetzzone (8) der Oberfläche S,
    — einer Vorrichtung zur Ableitung der leichten Phase durch Überlauf (11),
— einer Vorrichtung zur Ableitung der schweren Phase, die aus einem Schacht (9) und einem Abfluß (10) besteht.

2. Vorrichtung nach Anspruch 1, dadurch gekennzeichnet, daß sie besteht aus:

— einem eigentlichen Hydrierreaktor (1); dieser Reaktor trägt eine Zuführleitung (2), durch die die Mischung geschmolzener Salze, die das zu hydrierende Lithium enthält, ankommt, eine Wasserstoffzuführung (3) und eine Vorrichtung zur intensiven Bewegung, die aus dem eigentlichen Rührer (4) und an der Reaktorwand angebrachten Strombrechern (5) besteht,
— einem Absetzbehälter (7), dem eine Menge Q der Reaktionsmischung aus dem Reaktor (1) zugeführt wird; diese Reaktionsmischung besteht aus geschmolzenen Salzen, Lithium und in den Salzen gelöstem Lithiumhydrid; der Absetzbehälter besteht aus:
— einer Absetzzone (8) der Oberfläche S,
— einer Vorrichtung zur Ableitung der leichten Phase durch Überlauf (11),
— einer Vorrichtung zur Ableitung der schweren Phase, die aus einem Schacht (9) und einem Abfluß (10) besteht;
der Absetzteil wird in der Weise realisiert, daß man das in der Mischung vorhandene Lithium sich physikalisch von dem Rest dieser Mischung abtrennen (dekantieren) läßt; die Oberfläche S des Absetzteils ist so, daß

$$0,1 < \frac{S}{Q} < 0,3$$

ist; in dem Absetzteil (8) wird die physikalische Abtrennung des nicht hydrierten Lithiums von dem Rest der Mischung durchgeführt, dieses Lithium wird durch die Leitung (11) in den Reaktor (1) zurückgeführt.

3. Verfahren, bei dem die Vorrichtung nach einem der Ansprüche 1 oder 2 verwendet wird, dadurch gekennzeichnet, daß

— der Hydrierreaktor kontinuierlich mit Wasserstoff und der Mischung der geschmolzenen Salze, die das Lithium transportieren, gespeist und daß die Hydrierung vorzugsweise bei einer Temperatur zwischen 470 C und 510°C durchgeführt wird,
— die Mischung aus dem Hydrierreaktor, die Lithiumhydrid, nicht umgesetztes metallisches Lithium und die Mischung der geschmolzenen Salze enthält, kontinuierlich in den Absetzbehälter geführt wird,
— in dem Absetzbehälter das an der Oberfläche schwimmende Lithium abgetrennt und kontinuierlich in den Hydrierreaktor zurückgeführt wird, während das gebildete Lithiumhydrid, das in der Mischung der geschmolzenen Salze gelöst ist, abgezogen wird.

**Claims**

1. Device for continuous hydrogenation of lithium in a mixture of molten salts, characterised in that it incorporates:

— a hydrogenation reactor (1) which is stirred (4) and supplied continuously with the mixture of molten salts containing lithium (2) and with the hydrogen (3) required for the said hydrogenation
— a decanter (7) supplied (6) with a flow Q by the mixture obtained from the hydrogenation reactor, the said decanter incorporating:
    — a decantation zone (8) of surface area S,
    — a device for removing the light phase by over-flow,

— a device for removing the dense phase, incorporating a well (9) and a weir (10).

2. Device according to Claim 1, characterised in that it incorporates:

— a hydrogenation reactor (1) as such; this reactor incorporates a feed (2) through which the mixture of molten salts containing the lithium to be hydrogenated arrives, a hydrogen delivery (3) and intense stirring consisting of a stirrer as such (4) and baffles (5) attached to the reactor wall,
— a decanter (7) supplied (6) with a flow Q by the reacting mixture obtained from the reactor (1); this reacting mixture incorporates the mixture of molten salts, of lithium and of lithium hydride which is dissolved in the salts, the said decanter incorporates:
  — a decantation zone (8) of surface area S,
  — a device for removing the light phase by over-flow (11),
  — a device for removing the dense phase, incorporating a well (9) and a weir (10); the decantation part is made so that the physical separation (decantation) of the lithium present in the mixture from the remainder of this mixture is carried out in it, the surface S area of this decantation part is such that

$$0.1 < \frac{S}{Q} < 0.3;$$

in the decantation part (8) the physical separation of the lithium which has not been hydrogenated from the remainder of the mixture is carried out, this lithium is redirected, via the pipework (11) to the reactor (1).

3. Process employing the device of either of Claims 1 or 2, characterised in that

— the hydrogenation reactor is continuously supplied with hydrogen and the mixture of molten salts conveying the lithium; the hydrogenation is carried out at a temperature preferably between 470° C and 510° C,
— the mixture obtained from the hydrogenation reactor, which contains lithium hydride, unreacted metallic lithium and the mixture of molten salts, is continuously introduced into the decanter,
— in the decanter the supernatant lithium is separated and continuously recycled to the hydrogenation reactor while the lithium hydride formed which is dissolved in the mixture of molten salts is removed.